(19) Europäisches Patentamt
European Patent Office
Office européen des brevets

(11) **EP 2 739 680 B1**

(12) **FASCICULE DE BREVET EUROPEEN**

(45) Date de publication et mention de la délivrance du brevet:
**20.01.2021 Bulletin 2021/03**

(21) Numéro de dépôt: **12744114.5**

(22) Date de dépôt: **26.07.2012**

(51) Int Cl.:
*C08K 5/092* *(2006.01)*    *C03C 25/14* *(2018.01)*
*C03C 25/32* *(2018.01)*    *C08F 251/00* *(2006.01)*
*C08G 63/668* *(2006.01)*    *C08J 3/24* *(2006.01)*
*C08K 5/1545* *(2006.01)*    *C08K 5/51* *(2006.01)*
*D04H 3/12* *(2006.01)*    *D04H 1/587* *(2012.01)*
*D04H 1/645* *(2012.01)*    *D04H 1/4209* *(2012.01)*
*D04H 3/002* *(2012.01)*    *C09J 11/08* *(2006.01)*
*C08L 3/00* *(2006.01)*

(86) Numéro de dépôt international:
**PCT/FR2012/051774**

(87) Numéro de publication internationale:
**WO 2013/021112 (14.02.2013 Gazette 2013/07)**

(54) **COMPOSITION D'ENCOLLAGE POUR LAINE MINERALE A BASE DE SACCHARIDE REDUCTEUR ET DE SACCHARIDE HYDROGENE, ET PRODUITS ISOLANTS OBTENUS.**

SCHLICHTUNGSZUSAMMENSETZUNG FÜR MINERALWOLLE MIT EINEM REDUZIERENDEN SACCHARID UND EINEM HYDRIERTEN SACCHARID SOWIE RESULTIERENDE ISOLIERPRODUKTE

SIZING COMPOSITION FOR MINERAL WOOL CONTAINING A REDUCING SACCHARIDE AND A HYDROGENATED SACCHARIDE, AND RESULTING INSULATING PRODUCTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **05.08.2011 FR 1102476**

(43) Date de publication de la demande:
**11.06.2014 Bulletin 2014/24**

(73) Titulaire: **SAINT-GOBAIN ISOVER**
**92400 Courbevoie (FR)**

(72) Inventeurs:
• **JAFFRENNOU, Boris**
  **F-75019 Paris (FR)**
• **OBERT, Edouard**
  **60700 Fleurines (FR)**
• **KAPLAN, Benjamin**
  **F-75009 Paris (FR)**

(74) Mandataire: **Saint-Gobain Recherche**
**Département Propriété Industrielle**
**39 Quai Lucien Lefranc**
**93300 Aubervilliers (FR)**

(56) Documents cités:
**EP-A1- 2 230 222    WO-A1-2006/120523**
**WO-A1-2008/053332    WO-A1-2008/080938**
**WO-A2-2011/015946    FR-A- 1 066 176**
**FR-A1- 2 924 719    FR-A1- 2 935 707**
**US-A- 2 204 384**

EP 2 739 680 B1

**Description**

La présente invention se rapporte au domaine des produits d'isolation, thermiques et/ou acoustiques, à base de laine minérale, notamment de verre ou de roche, et d'un liant organique exempt de formaldéhyde.

L'invention concerne plus particulièrement une composition d'encollage apte à réticuler pour former ledit liant organique, qui renferme un saccharide réducteur, un saccharide hydrogéné et un agent de réticulation polyfonctionnel.

L'invention a également pour objet un procédé de préparation de ladite composition d'encollage, et les produits isolants qui en résultent.

La fabrication de produits d'isolation à base de laine minérale comprend généralement une étape de fabrication de la laine elle-même, qui peut être mise en œuvre par différents procédés, par exemple selon la technique connue du fibrage par centrifugation interne ou externe.

La centrifugation interne consiste à introduire la matière minérale en fusion (verre ou roche) dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés vers un organe récepteur par un courant gazeux ayant une température et une vitesse élevées, pour y former une nappe de fibres (ou laine minérale).

La centrifugation externe consiste, quant à elle, à déverser la matière en fusion à la surface périphérique externe d'organes rotatifs appelés rotors, d'où la matière en fusion est éjectée sous l'action de la force centrifuge. Des moyens d'étirage par courant gazeux et de collecte sur un organe de réception sont également prévus.

Pour assurer l'assemblage des fibres entre elles et permettre à la nappe d'avoir de la cohésion, on projette sur les fibres, sur le trajet allant de la sortie du dispositif centrifuge vers l'organe récepteur, une composition d'encollage contenant une résine thermodurcissable. La nappe de fibres revêtues de l'encollage est soumise à un traitement thermique, à une température généralement supérieure à 100°C, afin d'effectuer la polycondensation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage à projeter sur la laine minérale se présente généralement sous la forme d'une solution aqueuse renfermant la résine thermodurcissable et des additifs tels qu'un catalyseur de réticulation de la résine, un silane promoteur d'adhérence, une huile minérale anti-poussières, ... La composition d'encollage est le plus souvent appliquée sur les fibres par pulvérisation.

Les propriétés de la composition d'encollage dépendent en grande partie des caractéristiques de la résine. Du point de vue de l'application, il est nécessaire que la composition d'encollage présente une bonne aptitude à la pulvérisation et puisse se déposer à la surface des fibres afin de les lier efficacement.

La résine doit être stable pendant un laps de temps donné avant d'être utilisée pour former la composition d'encollage, laquelle composition est généralement préparée au moment de l'emploi en mélangeant la résine et les additifs mentionnés précédemment.

Sur le plan réglementaire, il est nécessaire que la résine soit considérée comme non polluante, c'est-à-dire qu'elle contienne - et qu'elle génère lors de l'étape d'encollage ou ultérieurement - le moins possible de composés pouvant nuire à la santé humaine ou à l'environnement.

Les résines thermodurcissables les plus couramment utilisées sont des résines phénoliques appartenant à la famille des résols. Outre leur bonne aptitude à réticuler dans les conditions thermiques précitées, ces résines sont solubles dans l'eau, possèdent une bonne affinité pour les fibres minérales, notamment en verre, et sont relativement peu coûteuses.

Les résols les plus usuels sont obtenus par condensation de phénol et de formaldéhyde, en présence d'un catalyseur basique. Au final, ces résols contiennent une certaine proportion de monomères n'ayant pas réagi, en particulier le formaldéhyde dont la présence n'est pas souhaitée à cause de ses effets nocifs avérés.

Pour cette raison, les résines à base de résol sont généralement traitées par de l'urée qui réagit avec le formaldéhyde libre en le piégeant sous forme de condensats urée-formaldéhyde non volatils. La présence d'urée dans la résine apporte en outre un avantage économique certain du fait de son faible coût, car on peut l'introduire en relativement grande quantité sans affecter les qualités d'emploi de la résine, notamment sans nuire aux propriétés mécaniques du produit final, ce qui abaisse notablement le coût total de la résine.

Il a néanmoins été observé que, dans les conditions de températures auxquelles la nappe est soumise pour obtenir la réticulation de la résine, les condensats urée-formaldéhyde ne sont pas stables ; ils se décomposent en redonnant du formaldéhyde et de l'urée, à son tour dégradée au moins partiellement en ammoniac, qui sont libérés dans l'atmosphère de l'usine.

La réglementation en matière de protection de l'environnement devenant plus contraignante oblige les fabricants de produits d'isolation à rechercher des solutions permettant d'abaisser encore les niveaux d'émissions indésirables, en particulier de formaldéhyde.

Des solutions de remplacement des résols dans les compositions d'encollage sont connues et se fondent sur l'emploi d'un d'acide carboxylique et d'un alcool.

Dans US 5 340 868, l'encollage comprend un polymère polycarboxylique, un β-hydroxylamide et un acide carboxylique monomérique au moins trifonctionnel.

Il a aussi été décrit des compositions d'encollage comprenant une alcanolamine renfermant au moins deux groupements hydroxyle et un polymère polycarboxylique (US 6 071 994, US 6 099 773, US 6 146 746) qui peuvent être associés à un copolymère (US 6 299 936).

Il a aussi été proposé des compositions d'encollage comprenant un polymère polycarboxylique et un polyol (US 2002/0091185, US 2002/0091185). Ces compositions peuvent contenir en outre un catalyseur qui peut être un composé contenant du phosphore (US 5 318 990, US 5 661 213, US 6331 350, US 2003/0008978), un fluoroborate (US 5 977 232) ou bien un cyanamide, un dicyanamide ou une cyanoguanidine (US 5 932 689), ou un tensioactif cationique, amphotère ou non ionique (US 2002/0188055), ou encore un agent de couplage de type silane (US 2004/0002567).

Dans WO 2006/120523, il est décrit une composition d'encollage qui comprend (a) un poly(alcool vinylique), (b) un agent de réticulation multifonctionnel choisi parmi les polyacides non polymériques ou leurs sels, les anhydrides ou un polyaldéhyde non polymérique et (c) éventuellement un catalyseur, le rapport pondéral (a)/(b) variant de 95:5 à 35:65 et le pH étant au moins égal à 1,25.

On connaît également de WO 2008/053332 une composition d'encollage qui comprend un adduit (a) d'un polymère de sucre et (b) d'un agent de réticulation multifonctionnel choisi parmi les polyacides monomériques ou leurs sels, et les anhydrides, qui est obtenu dans des conditions telles que le rapport pondéral (a)/(b) varie de 95:5 à 35:65.

Par ailleurs, il a été décrit des compositions d'encollage dont tout ou partie de l'alcool est remplacé par un ou plusieurs saccharides.

Dans US 2005/0215153, la composition d'encollage est formée à partir d'un pré-liant contenant un polymère d'acide carboxylique et d'un polyol, et d'une dextrine en tant que co-liant.

Dans US 5 895 804, la composition d'encollage comprend un polymère polycarboxylique de poids moléculaire au moins égal à 1000 et un polysaccharide de poids moléculaire au moins égal à 10000.

Dans WO 2009/080938, la composition d'encollage comprend au moins un acide organique polycarboxylique de masse molaire inférieure ou égale à 1000 et au moins un monosaccharide et/ou polysaccharide.

Enfin, on connaît de WO 2010/029266 une composition d'encollage qui comprend au moins un sucre hydrogéné et un agent de réticulation polyfonctionnel.

La présente invention a pour but d'améliorer les compositions d'encollage connues, notamment celle qui est divulguée dans WO 2009/080938, et les produits d'isolation thermique et/ou acoustique obtenus à partir de cette composition.

Il a en effet été constaté que l'application par pulvérisation de ladite composition d'encollage sur les fibres minérales n'était pas satisfaisante : rapidement après la pulvérisation, une partie de l'eau contenue dans les gouttelettes est éliminée, entraînant une augmentation importante de la viscosité de la composition d'encollage. Il s'ensuit que les gouttelettes se répartissent moins efficacement à la surface des fibres minérales et donc moins bien aux points de jonction des fibres comme il se doit.

Pour palier cet inconvénient, une quantité d'eau supplémentaire doit être ajoutée dans la composition d'encollage ou de manière séparée sur les fibres au moment de la pulvérisation. L'augmentation de la quantité d'eau à la pulvérisation pose des problèmes dans l'étuve où le matelas de fibres minérales encollées est traité afin d'obtenir la réticulation du liant. Pour évacuer l'eau excédentaire, il faut soit augmenter la température dans l'étuve, soit augmenter le temps de séjour du matelas dans l'étuve en réduisant la vitesse de la ligne de production. Quelle que soit la solution choisie, il s'ensuit une augmentation du coût du produit d'isolation final.

Selon l'invention, on remplace une partie du saccharide de la composition d'encollage connue par un saccharide hydrogéné ce qui permet d'abaisser la viscosité de la composition d'encollage à une valeur suffisamment basse pour qu'elle puisse être pulvérisée correctement sur les fibres minérales sans avoir à recours à un supplément d'eau.

Un autre but de l'invention est de proposer une composition d'encollage qui permet d'obtenir un rendement liant sur la ligne industrielle (« binder line efficiency » en anglais) élevé comme cela est indiqué plus loin.

Pour atteindre ces buts, la présente invention propose une composition d'encollage pour des produits isolants à base de laine minérale, notamment de verre ou de roche, qui comprend

- au moins un saccharide réducteur choisi parmi les monosaccharides réducteurs renfermant 3 à 8 atomes de carbone et les dextrines présentant un équivalent dextrose supérieur ou égal à 15 et inférieur à 100,
- au moins un saccharide hydrogéné choisi parmi l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon, et
- au moins un agent de réticulation polyfonctionnel,
  le(s) saccharide(s) hydrogéné(s) représentant 40 à 90 % du poids total de(s) saccharide(s) réducteur(s) et de(s) saccharide(s) hydrogéné(s).

L'expression « saccharide réducteur » doit être entendue au sens conventionnel, à savoir un monosaccharide ou un polysaccharide porteur d'un groupe OH hémiacétalique libre, ce groupe ayant notamment une action réductrice sur les solutions cupro-alcalines.

A titre d'exemples de monosaccharides réducteurs préférés, on peut citer les aldoses naturels (appartenant à la série D), notamment les hexoses tels que glucose, le mannose et le galactose.

Les dextrines sont des composés répondant à la formule générale $(C_6H_{10}O_5)_n$ obtenus par hydrolyse partielle d'amidon. Les procédés de préparation des dextrines sont connus. Par exemple, les dextrines peuvent être préparées en chauffant ou en séchant à sec un amidon, généralement en présence d'un catalyseur acide, ce qui conduit à la rupture des molécules d'amylose et d'amylopectine qui constituent ledit amidon en produits de masse molaire plus faible. Les dextrines peuvent aussi être obtenues en traitant l'amidon par voie enzymatique avec une ou plusieurs amylases, notamment microbiennes, aptes à hydrolyser les liaisons de l'amidon. La nature du traitement (chimique ou enzymatique) et les conditions d'hydrolyse ont une incidence directe sur la masse molaire moyenne et la distribution des masses molaires de la dextrine.

Les dextrines conformes à l'invention peuvent être obtenues à partir d'amidon ou de dérivés d'amidon d'origine végétale variée, par exemple issues de tubercules tels que la pomme de terre, le manioc, le maranta et la patate douce, issues de graines telles que le blé, le maïs, le seigle, le riz, l'orge, le millet, l'avoine et le sorgho, issues de fruits tels que le marron, la châtaigne, et la noisette, ou issues de légumineuses telles que le pois et le haricot.

On préfère en particulier les dextrines ayant un équivalent en dextrose DE (« Dextrose Equivalent » en anglais) supérieur ou égal à 5, de préférence supérieur ou égal à 10, avantageusement supérieur ou égal à 15, et mieux encore inférieur à 100.

De manière conventionnelle, l'équivalent en dextrose DE est défini par la relation suivante :

$$DE = 100 \times \left( \frac{\text{nombre de liaisons glycosidiques rompues}}{\text{nombre de liaisons glycosidiques dans l'amidon initial}} \right)$$

Par « saccharide hydrogéné », on entend l'ensemble des produits résultant de la réduction, de quelque manière que ce soit, d'un saccharide choisi parmi les monosaccharides, les oligosaccharides, les polysaccharides linéaires, ramifiés ou cycliques, et les mélanges de ces produits, notamment les hydrolysats d'amidon.

L'hydrogénation du saccharide peut être effectuée par les méthodes connues opérant dans des conditions de pression d'hydrogène et de température élevées, en présence d'un catalyseur choisi dans les groupes IB, IIB, IVB, VI, VII et VIII du tableau périodique des éléments, de préférence dans le groupe comprenant le nickel, le platine, le palladium, le cobalt, le molybdène et leurs mélanges. Le catalyseur préféré est le nickel de Raney. L'hydrogénation transforme le saccharide ou le mélange de saccharides (par exemple un hydrolysat d'amidon) en polyols correspondants.

Bien que n'étant pas préférée, l'hydrogénation peut être mise en œuvre en l'absence de catalyseur d'hydrogénation, en présence d'une source d'hydrogène autre que le gaz hydrogène, par exemple un borohydrure de métal alcalin tel que le borohydrure de sodium.

A titre d'exemples de saccharides hydrogénés, on peut citer l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon, notamment commercialisés par la société Roquette sous la dénomination Polysorb®. De préférence, on utilise les produits d'hydrogénation d'hydrolysats d'amidon, avantageusement un sirop de maltitol.

Le saccharide hydrogéné conforme à l'invention possède une masse molaire moyenne en nombre inférieure à 5000, plus particulièrement inférieure à 1000, et mieux encore supérieure à 150.

Dans la composition d'encollage, le(s) saccharide(s) hydrogéné(s) représente(nt) de préférence 40 à 80 % du poids total de(s) saccharide(s) réducteur(s) et de(s) saccharide(s) hydrogéné(s), avantageusement 40 à 70 % et mieux encore 40 à 60 %.

Comme indiqué précédemment, outre le fait de réduire la viscosité de la composition d'encollage, le remplacement d'une partie du saccharide par un saccharide hydrogéné a un effet positif sur le rendement liant de la ligne industrielle servant à la fabrication du produit d'isolation à base de laine minérale. Ce rendement est défini comme étant le rapport de la quantité de liant dans le produit d'isolation final à la quantité de composition d'encollage (exclusion faite de l'eau) utilisée pour la fabrication de ce produit. Le rendement liant est plus élevé, à teneur en saccharide total constante, quand la composition d'encollage contient au moins un saccharide hydrogéné. Les inventeurs pensent que l'accroissement du rendement résulte du fait que le saccharide hydrogéné n'est pas susceptible d'être déshydraté, contrairement aux saccharides non hydrogénés.

L'agent de réticulation polyfonctionnel est apte à réagir avec les groupes hydroxyles du saccharide réducteur et du saccharide hydrogéné sous l'effet de la chaleur pour former des liaisons esters qui conduisent à l'obtention d'un réseau polymérique dans le liant final. Ledit réseau polymérique permet d'établir des liaisons au niveau des points de jonction des fibres dans la laine minérale.

L'agent de réticulation polyfonctionnel est choisi parmi les acides organiques polycarboxyliques ou les sels de ces acides, les anhydrides et les polyaldéhydes.

Par « acide organique polycarboxylique », on entend un acide organique comprenant au moins deux fonctions carboxyliques, de préférence au plus 300, et avantageusement au plus 70, et mieux encore au plus 15 fonctions carboxyliques.

L'acide organique polycarboxylique peut être un acide non polymérique ou polymérique ; il présente une masse molaire en nombre en général inférieure ou égale à 50000, de préférence inférieure ou égale à 10000 et avantageusement inférieure ou égale à 5000.

L'acide organique polycarboxylique non polymérique est un acide acyclique, ramifié ou non, saturé ou insaturé, un acide cyclique ou un acide aromatique.

L'acide organique polycarboxylique non polymérique peut être un acide dicarboxylique, par exemple l'acide oxalique, l'acide malonique, l'acide succinique, l'acide glutarique, l'acide adipique, l'acide pimélique, l'acide subérique, l'acide azelaïque, l'acide sébacique, l'acide malique, l'acide tartrique, l'acide tartronique, l'acide aspartique, l'acide glutamique, l'acide fumarique, l'acide itaconique, l'acide maléique, l'acide traumatique, l'acide camphorique, l'acide phtalique et ses dérivés, notamment contenant au moins un atome de bore ou de chlore, l'acide tétrahydrophtalique et ses dérivés, notamment contenant au moins un atome de chlore tel que l'acide chlorendique, l'acide isophtalique, l'acide téréphtalique, l'acide mésaconique et l'acide citraconique ; un acide tricarboxylique, par exemple l'acide citrique, l'acide tricarballylique, l'acide 1,2,4-butanetricarboxylique, l'acide aconitique, l'acide hémimellitique, l'acide triméllitique et l'acide trimésique ; un acide tétracarboxylique, par exemple l'acide 1,2,3,4-butanetétracarboxylique et l'acide pyroméllitique.

De manière particulièrement avantageuse, l'acide organique polycarboxylique non polymérique renferme deux à quatre fonctions carboxyliques.

A titre d'exemples d'acide organique polycarboxylique polymérique, on peut citer les homopolymères d'acide carboxylique insaturé tels que l'acide (méth)acrylique, l'acide crotonique, l'acide isocrotonique, l'acide maléique, l'acide cinnamique, l'acide 2-méthylmaléique, l'acide fumarique, l'acide itaconique, l'acide 2-méthylitaconique, l'acide $\alpha,\beta$-méthylèneglutarique et les monoesters d'acide dicarboxylique insaturés, tels que les maléates et les fumarates d'alkyle en $C_1$-$C_{10}$, et les copolymères d'au moins un acide carboxylique insaturé précité et d'au moins un monomère vinylique tel que le styrène, substitué ou non par des groupements alkyle, hydroxyalkyle ou sulfonyle, ou par un atome d'halogène, le (méth)acrylonitrile, le (méth)acrylamide, substitué ou non par des groupements alkyle en $C_1$-$C_{10}$, les alkyl(méth)acrylates, notamment le (méth)acrylate de méthyle, le (méth)acrylate d'éthyle, le (méth)acrylate de n-butyle et le (méth)acrylate d'isobutyle, le (méth)acrylate de glycidyle, le butadiène et un ester vinylique, notamment l'acétate de vinyle.

De préférence, la composition d'encollage comprend au moins un acide organique polycarboxylique non polymérique ayant une masse molaire en nombre inférieure ou égale à 1000, de préférence inférieure ou égale à 750 et avantageusement inférieure ou égale à 500, éventuellement en mélange avec au moins un acide organique polymérique.

L'agent de réticulation polyfonctionnel peut être aussi un anhydride, notamment l'anhydride maléique, l'anhydride succinique ou l'anhydride phtalique. Toutefois, l'ajout d'un anhydride dans la composition d'encollage fait chuter fortement le pH ce qui entraîne des problèmes de corrosion des installations dans la ligne de fabrication et d'hydrolyse du saccharide hydrogéné. L'introduction d'une base permet d'amener le pH de la composition d'encollage à une valeur suffisante pour éviter ces problèmes. Le coût lié à l'ajout supplémentaire de la base fait que l'usage d'anhydride n'est pas préféré.

L'agent de réticulation polyfonctionnel peut encore être un polyaldéhyde.

Par « polyaldéhyde », on entend un aldéhyde comprenant au moins deux fonctions aldéhyde.

De préférence, le polyaldéhyde est un dialdéhyde non polymérique, par exemple le glyoxal, le glutaraldéhyde, le 1,6-hexanedial ou le dialdéhyde 1,4-téréphtalique.

Les polyaldéhydes ont une très grande réactivité vis-à-vis des groupes hydroxyle du saccharide réducteur et du saccharide hydrogéné mais aussi des groupes hydroxyle en général ce qui peut présenter des inconvénients, notamment une diminution de la stabilité et/ou une pré-gélification de la composition d'encollage avant le traitement de réticulation thermique. Pour prévenir ces inconvénients, les fonctions aldéhyde du polyaldéhyde sont avantageusement bloquées pour empêcher la réaction avec les constituants présents dans la composition d'encollage avant l'entrée de la laine minérale dans l'étuve. A titre d'exemple d'agent qui permet le blocage des fonctions aldéhyde, on peut citer l'urée et les urées cycliques.

Parmi les agents de réticulation polyfonctionnels précités, les acides organiques polycarboxyliques sont préférés.

Dans la composition d'encollage, le(s) saccharide(s) réducteur(s) et le(s) saccharide(s) hydrogéné(s) représente(nt) 10 à 90 % du poids du mélange constitué par le(s) saccharide(s) réducteur(s), le(s) saccharide(s) hydrogéné(s) et l'agent de réticulation polyfonctionnel, de préférence 20 à 85 %, avantageusement 30 à 80 %, mieux encore 40 à 65 % et de manière particulièrement avantageuse 45 à 65 %.

De manière générale, la composition d'encollage selon l'invention ne contient pas de monoalkylamine, dialkylamine et d'alcanolamine. Il n'est en effet pas souhaité que ces composés (qui sont aptes à réagir avec les autres constituants de la composition d'encollage) soient incorporés dans le réseau polymérique du liant final.

La composition d'encollage peut comprendre en outre un catalyseur, acide ou basique, qui a notamment pour fonction d'ajuster la température de début de réticulation.

Le catalyseur peut être choisi parmi les bases et les acides de Lewis, tels que les argiles, la silice colloïdale ou non, les amines organiques, les amines quaternaires, les oxydes métalliques, les sulfates métalliques, les chlorures métalliques, les sulfates d'urée, les chlorures d'urée et les catalyseurs à base de silicates.

Le catalyseur peut également être un composé contenant du phosphore, par exemple un sel d'hypophosphite de métal alcalin, un phosphite de métal alcalin, un polyphosphate de métal alcalin, un hydrogénophosphate de métal alcalin, un acide phosphorique ou un acide alkylphosphonique. De préférence, le métal alcalin est le sodium ou le potassium.

Le catalyseur peut encore être un composé contenant du fluor et du bore, par exemple l'acide tétrafluoroborique ou un sel de cet acide, notamment un tétrafluoroborate de métal alcalin tel que le sodium ou le potassium, un tétrafluoroborate de métal alcalino-terreux tel que le calcium ou le magnésium, un tétrafluoroborate de zinc et un tétrafluoroborate d'ammonium.

De préférence, le catalyseur est l'hypophosphite de sodium, le phosphite de sodium et les mélanges de ces composés.

La quantité de catalyseur introduite dans la composition d'encollage peut représenter jusqu'à 20 % du poids total du(des) saccharide(s) réducteur(s), du(des) saccharide(s) hydrogéné(s) et de l'agent de réticulation polyfonctionnel, de préférence jusqu'à 10 %, et avantageusement est au moins égale à 1 %.

La composition d'encollage conforme à l'invention peut comprendre en outre les additifs conventionnels ci-après dans les proportions suivantes calculées sur la base de 100 parts en poids de saccharide(s) réducteur(s), de saccharide(s) hydrogéné(s) et d'agent de réticulation polyfonctionnel :

- 0 à 2 parts de silane, en particulier un aminosilane ou un epoxysilane,
- 0 à 20 parts d'huile, de préférence 4 à 15 parts,
- 0 à 30 parts d'urée, de préférence 0 à 20 parts,
- 0 à 5 parts d'un silicone,
- 0 à 20 parts d'un polyol différent des saccharides précités,
- 0 à 30 parts d'un «extendeur» choisi parmi les dérivés de la lignine tel que le lignosulfonate d'ammonium (LSA) ou le lignosulfonate de sodium, et les protéines animales ou végétales.

Le rôle des additifs est connu et brièvement rappelé : le silane est un agent de couplage entre les fibres et le liant, et joue également le rôle d'agent anti-vieillissement ; les huiles sont des agents anti-poussières et hydrophobes ; l'urée et le glycérol jouent le rôle de plastifiants et permettent d'éviter la prégélification de la composition d'encollage ; le silicone est un agent hydrophobe qui a pour fonction de réduire l'absorption d'eau par le produit d'isolation ; l'« extendeur » est une charge organique soluble ou dispersable dans la composition d'encollage aqueuse qui permet notamment de diminuer le coût de la composition d'encollage.

Le polyol ajouté en tant qu'additif est nécessairement différent du saccharide réducteur et du saccharide hydrogéné. Ce polyol peut être notamment le glycérol, un glycol tel que l'éthylène glycol, le propylène glycol, le butylène glycol et les poly(alkylène) glycols à base de ces glycols, ou les homopolymères et copolymères d'alcool vinylique.

Lorsque l'agent de réticulation polyfonctionnel est un acide organique polycarboxylique, la composition d'encollage présente un pH acide, de l'ordre de 1 à 5 selon le type d'acide utilisé, de préférence supérieur ou égal à 1,0. Avantageusement, le pH est maintenu à une valeur au moins égale à 1,5 de manière à limiter les problèmes d'instabilité de la composition d'encollage et de corrosion de la ligne de fabrication, grâce à l'ajout d'un composé aminé qui n'est pas apte à réagir avec le saccharide réducteur et le saccharide hydrogéné, par exemple une amine tertiaire, notamment la triéthanolamine. La quantité de composé aminé peut représenter jusqu'à 30 parts en poids du poids total de(s) saccharide(s) réducteur(s) et de(s) saccharide(s) hydrogéné(s) et d'acide organique polycarboxylique.

La composition d'encollage est destinée à être appliquée sur des fibres minérales, notamment des fibres de verre ou de roche.

De manière classique, la composition d'encollage est projetée sur les fibres minérales à la sortie du dispositif centrifuge et avant leur collecte sur l'organe récepteur sous la forme d'une nappe de fibres qui est ensuite traitée à une température permettant la réticulation de l'encollage et la formation d'un liant infusible. La réticulation de l'encollage selon l'invention se fait à une température comparable à celle d'une résine formophénolique classique, à une température supérieure ou égale à 110°C, de préférence supérieure ou égale à 130°, et avantageusement supérieure ou égale à 140°C.

Les produits isolants acoustiques et/ou thermiques obtenus à partir de ces fibres encollées constituent aussi un objet de la présente invention.

Ces produits se présentent généralement sous la forme d'un matelas ou d'un feutre de laine minérale, de verre ou de roche, ou encore d'un voile de fibres minérales, également de verre ou de roche, destiné notamment à former un revêtement de surface dudit matelas ou dudit feutre.

Les exemples qui suivent permettent d'illustrer l'invention sans toutefois la limiter.

Dans ces exemples, on mesure :

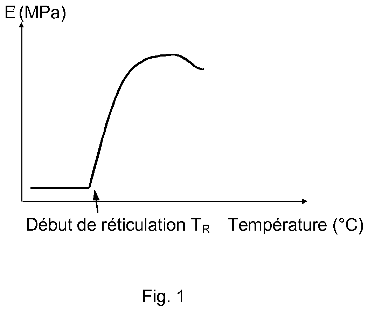

- la température de début de réticulation ($T_R$) par la méthode Dynamic Mechanical Analysis (DMA) qui permet de caractériser le comportement viscoélastique d'un matériau polymérique. On procède comme suit : un échantillon de papier Whatmann est imprégné de la composition d'encollage (teneur en matières solides organiques de l'ordre de 40 %) puis est fixé horizontalement entre deux mors. Un élément oscillant muni d'un dispositif de mesure de la contrainte en fonction de la déformation appliquée est disposé sur la face supérieure de l'échantillon. Le dispositif permet de calculer le module d'élasticité E'. L'échantillon est chauffé à une température variant de 20 à 250°C à la vitesse de 4°C/min. A partir des mesures, on établit la courbe de variation du module d'élasticité E' (en MPa) en fonction de la température (en °C) dont l'allure générale est donnée dans la Figure 1. On détermine sur la courbe les valeurs correspondant à la température de début de réticulation ($T_R$), en °C.

- la viscosité, exprimée en mPa.s, à l'aide d'un rhéomètre de type rotationnel plan-plan avec un cisaillement de 100 $s^{-1}$, à 20°C.

- la résistance en traction selon la norme ASTM C 686-71 T sur un échantillon découpé par estampage dans le produit d'isolation. L'échantillon a la forme d'un tore de 122 mm de longueur, 46 mm de largeur, un rayon de courbure de la découpe du bord extérieur égal à 38 mm et un rayon de courbure de la découpe du bord inférieur égal à 12,5 mm.

L'échantillon est disposé entre deux mandrins cylindriques d'une machine d'essais dont l'un est mobile et se déplace à vitesse constante. On mesure la force de rupture F (en Newton) de l'échantillon et on calcule la résistance en traction RT définie par le rapport de la force de rupture F à la masse de l'échantillon.

La résistance en traction est mesurée après la fabrication (résistance en traction initiale notée RTfab) et après un vieillissement accéléré dans un autoclave à une température de 105°C sous 100 % d'humidité relative pendant 15 minutes (RT15).

- l'épaisseur initiale du produit d'isolation et l'épaisseur après différentes périodes de temps sous compression avec un taux de compression (défini comme étant le rapport de l'épaisseur nominale à l'épaisseur sous compression) égal à 4,8/1 (exemples 7 à 12 et 15 à 17) et 8/1 (exemples 13 et 14). Les mesures d'épaisseur permettent d'évaluer la bonne tenue dimensionnelle du produit.

- l'absorption d'eau dans les conditions de la norme EN 1609, exprimée en kg d'eau absorbée par m$^2$ de produit isolant. Les produits d'isolation présentant une absorption d'eau inférieure à 1 kg/m$^2$ sont considérés comme ayant une faible absorption d'eau à court terme (24 heures) : ils appartiennent à la classe « WS » selon la certification ACERMI.

## EXEMPLES 1 A 6

On prépare des compositions d'encollage comprenant les constituants figurant dans le tableau 1 exprimé en parts pondérales.

Les compositions d'encollage sont préparées en introduisant successivement, dans un récipient contenant de l'eau, le saccharide réducteur, le saccharide hydrogéné, l'acide citrique et l'hypophosphite de sodium (catalyseur) sous une agitation vigoureuse jusqu'à dissolution complète des constituants.

Les propriétés des compositions d'encollage figurant dans le tableau 1 sont évaluées comparativement à une composition d'encollage classique renfermant une résine formophénolique et de l'urée (Référence) préparée conformément à l'exemple 2, essai 1 de WO 01/96254 A1 et à une composition ne contenant pas de saccharide hydrogéné (exemple 6 comparatif).

Les compositions d'encollage des exemples 1 à 5 présentent une température de début de réticulation ($T_R$) qui est comparable à celle de l'exemple 6 comparatif et de la Référence.

Le pH des compositions d'encollage conformes à l'invention est similaire à celui de l'exemple 6 comparatif.

Les viscosités des exemples 1 à 5 sont, quel que soit l'extrait sec, plus faibles que celle de l'exemple 6 comparatif. Notamment, les compositions de l'exemple 4 à 70 et 75 % d'extrait sec possèdent une viscosité environ 3 fois plus faible.

**EXEMPLES 7 A 14**

Ces exemples illustrent la fabrication de produits d'isolation à base de laine de verre sur une ligne industrielle.

La laine minérale est produite en continu sur une ligne de 2,4 m de large par la technique de centrifugation interne dans laquelle la composition de verre fondu est transformée en fibres au moyen d'un outil dénommé assiette de centrifugation, comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande équipé de caissons d'aspiration internes qui retiennent la laine minérale sous forme d'un feutre ou d'une nappe à la surface du convoyeur. Le convoyeur passe ensuite en continu dans une étuve à 270°C où les constituants de l'encollage polymérisent pour former un liant.

Le produit d'isolation obtenu à la sortie de l'étuve présente soit une densité nominale égale à 17,5 kg/m$^3$ et une épaisseur nominale égale à 75 mm (exemples 7 à 12) soit une densité nominale égale à 10,6 kg/m$^3$ et une épaisseur nominale égale à 80 mm (exemples 13 et 14).

Les compositions d'encollage utilisées sont données dans le tableau 2, les quantités étant exprimées en parts pondérales. Elles sont préparées par simple mélange des constituants dans de l'eau sous agitation vigoureuse jusqu'à dissolution ou dispersion complète des constituants.

Les propriétés des produits d'isolation sont évaluées comparativement à des produits utilisant les compositions d'encollage suivantes :

- composition d'encollage selon l'exemple 6 (comparatif) à laquelle on a ajouté les additifs (silane et huile minérale) : exemple 11,
- composition d'encollage renfermant la résine formophénolique et de l'urée (Référence) décrite dans les exemples 1 à 6, du sulfate d'ammonium et les additifs précités : exemples 12 et 14.

Les produits des exemples 7 à 10 selon l'invention sont obtenus en utilisant une composition d'encollage présentant un extrait sec au niveau de la couronne de pulvérisation qui est égal à 6,0 %, plus élevé que dans l'exemple comparatif 11, égal à 5,1 %. La résistance en traction et l'épaisseur après compression des produits des exemples 7 à 10 sont similaires à celles de l'exemple 11.

Les épaisseurs des produits des exemples 7 à 10 et 13 sont également similaires respectivement à celles du produit des exemples 12 et 14 comparatifs utilisant une résine formophénolique. La résistance en traction, bien que plus faible que celle des exemples comparatifs 12 et 14, est cependant acceptable.

**EXEMPLES 15 A 17**

On fabrique des produits d'isolation ayant une densité nominale égale à 17,5 kg/m$^3$ et une épaisseur nominale égale à 75 mm dans les conditions décrites dans les exemples 7 à 12, modifiées en ce que la perte au feu est réduite à 5,2 %.

Les compositions d'encollage utilisées figurent dans le tableau 3 ainsi que les propriétés des produits d'isolation obtenus.

Les produits des exemples 15 et 16 possèdent des épaisseurs après compression qui sont quasi-identiques à celles du produit de l'exemple 17. La résistance en traction de ces exemples est presque aussi élevée que celle du produit de l'exemple 17.

L'absorption d'eau est faible et demeure inférieure à la limite maximale requise de 1 kg/m$^2$.

Tableau 1

| | Ex. 1 | Ex. 2 (comp) | Ex. 3 | Ex. 4 | Ex. 5 | Ex. 6 (comp.) | Réf. |
|---|---|---|---|---|---|---|---|
| **Composition** | | | | | | | |
| Saccharide réducteur | | | | | | | |
| Roclys® C3072S[1] | 31 | 50 | 31 | 12 | 31 | 62 | - |
| Saccharide hydrogéné | | | | | | | |
| Maltilite® P200[2] | 31 | - | - | - | - | - | - |

(suite)

| | Ex. 1 | Ex. 2 (comp) | Ex. 3 | Ex. 4 | Ex. 5 | Ex. 6 (comp.) | Réf. |
|---|---|---|---|---|---|---|---|
| **Composition** | | | | | | | |
| Maltilite® 5575 [3] | - | 12 | 31 | 50 | 24 | - | - |
| Acide citrique | 38 | 38 | 38 | 38 | 45 | 38 | - |
| Hypophosphite de sodium | 5 | 5 | 5 | 5 | 5 | 5 | - |
| **Propriétés** | | | | | | | |
| Température de début de réticulation $T_R$ (°C) | 137 | 121 | 134 | 141 | 125 | 116 | 151 |
| Viscosité (mPa.s) | | | | | | | |
| Extrait sec : 10 % | 1,2 | 1,3 | 1,2 | 1,2 | 1,1 | 1,3 | 1,0 |
| Extrait sec : 30 % | 2,9 | 3,1 | 2,9 | 2,8 | 2,5 | 3,1 | 2,4 |
| Extrait sec : 50 % | 15 | 18 | 17 | 14 | 13 | 19 | 13 |
| Extrait sec : 65 % | 56 | 78 | 67 | 46 | 51 | 81 | n. d. |
| Extrait sec : 70 % | 453 | 597 | 521 | 351 | 352 | $1,1 \times 10^3$ | n. d. |
| Extrait sec : 75 % | $2,2 \times 10^3$ | $3,6 \times 10^3$ | $2,5 \times 10^3$ | $1,6 \times 10^3$ | $1,9 \times 10^3$ | $5,1 \times 10^3$ | n.d. |
| pH[4] | 1,7 | 1,8 | 1,7 | 1,8 | 1,7 | 1,8 | 6,0 |

[1] dextrine issue d'amidon de maïs ; masse molaire moyenne en poids : 3510 ; indice de polydispersité IP : 5,2 ; équivalent en dextrose DE : 30 ; commercialisée par ROQUETTE FRERES

[2] D-maltitol cristallisé; commercialisé par TEREOS

[3] sirop de maltitol à 75 % de matières sèches contenant 55 % de maltitol; commercialisé par TEREOS

[4] solution à 30 % de matières solides

Tableau 2

| | Ex. 7 | Ex. 8 | Ex. 9 (comp) | Ex. 10 | Ex. 11 (comp.) | Ex. 12 (comp.) | Ex. 13 | Ex. 14 (comp.) |
|---|---|---|---|---|---|---|---|---|
| **Composition** | | | | | | | | |
| Référence | - | - | - | - | - | 100 | - | 100 |
| Roclys® C3072S[1] | 16,0 | 31,0 | 46,0 | 31,0 | 62,0 | - | 31,0 | - |
| Maltilite® 5575[2] | 36,0 | 24,0 | 12,0 | 31,0 | - | - | 24,0 | - |
| Acide citrique | 48,0 | 45,0 | 42,0 | 38,0 | 38,0 | - | 45,0 | - |
| Hypophosphite de sodium | 5,0 | 5,0 | 5,0 | 5,0 | 5,0 | - | 5,0 | - |
| γ-aminopropyltriéthoxysilane | 0,5 | 0,5 | 0,5 | 0,5 | 0,5 | 0,5 | 0,5 | 0,5 |
| Huile minérale | 8,0 | 8,0 | 8,0 | 8,0 | 8,0 | 9,5 | 8,0 | 9,5 |
| Silicone | 2,0 | 2,0 | 2,0 | 2,0 | 2,0 | - | 1,0 | - |
| Sulfate d'ammonium | - | - | - | - | - | 3,0 | - | 3,0 |
| **Propriétés** | | | | | | | | |
| Résistance en traction (N/g) | | | | | | | | |
| RTfab | 3,9 | 4,0 | 4,0 | 3,3 | 3,9 | 4,3 | 1,8 | 2,0 |
| RT15 | 2,8 | 3,4 | 3,5 | 2,5 | 3,5 | 3,9 | 1,6 | 1,8 |
| Epaisseur (mm) | | | | | | | | |
| 1 heure | 78 | 80 | 79 | 76 | 79 | 79 | 116 | 122 |
| 1 jour | 76 | 77 | 77 | 73 | 77 | 78 | 105 | 108 |
| 14 jours | 72 | 72 | 75 | 65 | 73 | n. d. | 96 | 109 |
| 30 jours | 71 | 75 | 74 | 69 | 73 | 75 | 95 | 102 |

(suite)

| Propriétés | | | | | | | | |
|---|---|---|---|---|---|---|---|---|
| 90 jours | 70 | 74 | 74 | 64 | 71 | 74 | n. d. | n. d. |
| Perte au feu nominale (%) | 6,0 | 6,0 | 6,0 | 6,0 | 6,0 | 4,7 | 5,2 | 4,7 |
| Extrait sec couronne pulvérisation (%) | 6,0 | 6,0 | 6,0 | 6,0 | 5,1 | 6,8 | 6,0 | 6,8 |

[1] dextrine issue d'amidon de maïs ; masse molaire moyenne en poids : 3510 ; indice de polydispersité IP : 5,2 ; équivalent en dextrose DE : 30 ; commercialisée par ROQUETTE FRERES

[2] sirop de maltitol à 75 % de matières sèches contenant 55 % de maltitol; commercialisé par TEREOS n. d. : non déterminé

Tableau 3

| | Ex. 15 | Ex. 16 | Ex. 17 (comp.) |
|---|---|---|---|
| **Composition** | | | |
| Référence | - | - | 100 |
| Roclys® C3072S[1] | 31,0 | 25,0 | - |
| Maltilite® 5575[2] | 24,0 | 19,0 | - |
| Acide citrique | 45,0 | 56,0 | - |
| Hypophosphite de sodium | 5,0 | 5,0 | - |
| γ-aminopropyltriéthoxysilane | 0,5 | 0,5 | 0,5 |
| Huile minérale | 8,0 | 8,0 | 9,5 |
| Silicone | 2,0 | 2,0 | 2,0 |
| Sulfate d'ammonium | - | - | 3,0 |
| **Propriétés** | | | |
| Résistance en traction (N/g) | | | |
| RTfab | 4,2 | 4,1 | 4,2 |
| RT15 | 3,4 | 3,3 | 3,7 |
| Epaisseur (mm) | | | |
| 1 heure | 84 | 85 | 84 |
| 1 jour | 81 | 82 | 83 |
| 14 jours | 77 | 79 | 81 |
| 30 jours | 76 | 79 | 80 |
| Absorption d'eau (kg/m$^2$) | 0,4 | 0,3 | 0,2 |
| Perte au feu nominale (%) | 5,2 | 5,2 | 4,7 |
| Extrait sec couronne pulvérisation (%) | 6,0 | 6,0 | 6,8 |

[1] dextrine issue d'amidon de maïs ; masse molaire moyenne en poids : 3510 ; indice de polydispersité IP : 5,2 ; équivalent en dextrose DE : 30 ; commercialisée par ROQUETTE FRERES

[2] sirop de maltitol à 75 % de matières sèches contenant 55 % de maltitol; commercialisé par TEREOS

**Revendications**

1. Composition d'encollage pour des produits isolants à base de laine minérale, notamment de roche ou de verre, **caractérisée en ce qu'**elle comprend

- au moins un saccharide réducteur choisi parmi les monosaccharides réducteurs renfermant 3 à 8 atomes de carbone et les dextrines présentant un équivalent dextrose supérieur ou égal à 15 et inférieur à 100,
- au moins un saccharide hydrogéné choisi parmi l'érythritol, l'arabitol, le xylitol, le sorbitol, le mannitol, l'iditol, le maltitol, l'isomaltitol, le lactitol, le cellobitol, le palatinitol, le maltotritol et les produits d'hydrogénation d'hydrolysats d'amidon, et
- au moins un agent de réticulation polyfonctionnel,

le(s) saccharide(s) hydrogéné(s) représentant 40 à 90 % du poids total de(s) saccharide(s) réducteur(s) et de(s) saccharide(s) hydrogéné(s).

2. Composition selon la revendication 1, **caractérisée en ce que** le saccharide réducteur est choisi parmi les monosaccharides réducteurs renfermant 5 à 7 atomes de carbone.

3. Composition selon la revendication 2, **caractérisée en ce que** le monosaccharide réducteur est un aldose.

4. Composition selon la revendication 3, **caractérisée en ce que** l'aldose est un hexose tel que le glucose, le mannose et le galactose.

5. Composition selon la revendication 1, **caractérisée en ce que** le saccharide hydrogéné est le produit d'hydrogénation d'un hydrolysat d'amidon, de préférence un sirop de maltitol.

6. Composition selon la revendication 1, **caractérisée en ce que** le saccharide hydrogéné possède une masse molaire moyenne en nombre inférieure à 5000, plus particulièrement inférieure à 1000, et mieux encore supérieure à 150.

7. Composition selon l'une des revendications 1 à 6, **caractérisée en ce que** le(s) saccharide(s) hydrogéné(s) représente(nt) 40 à 60 % du poids total de(s) saccharide(s) réducteur(s) et de(s) saccharide(s) hydrogéné(s).

8. Composition selon l'une des revendications 1 à 7, **caractérisée en ce que** l'agent de réticulation polyfonctionnel est choisi parmi les acides organiques polycarboxyliques ou les sels de ces acides, les anhydrides et les polyaldéhydes.

9. Composition selon la revendication 8, **caractérisée en ce que** l'acide organique polycarboxylique comprend au moins deux fonctions carboxyliques, de préférence au plus 300, et avantageusement au plus 70, et mieux encore au plus 15 fonctions carboxyliques.

10. Composition selon la revendication 9, **caractérisée en ce que** l'acide organique polycarboxylique est un acide non polymérique ou polymérique et **en ce qu'**il présente une masse molaire en nombre en général inférieure ou égale à 50000, de préférence inférieure ou égale à 10000 et avantageusement inférieure ou égale à 5000.

11. Composition selon la revendication 9 ou 10, **caractérisée en ce que** l'acide organique polycarboxylique est non polymérique et renferme deux à quatre fonctions carboxyliques.

12. Composition selon la revendication 8, **caractérisée en ce que** l'anhydride est l'anhydride maléique, l'anhydride succinique ou l'anhydride phtalique.

13. Composition selon la revendication 8, **caractérisée en ce que** le polyaldéhyde est un dialdéhyde non polymérique, tel que le glyoxal, le glutaraldéhyde, le 1,6-hexanedial ou le dialdéhyde 1,4-téréphtalique.

14. Composition selon l'une des revendications 1 à 13, **caractérisée en ce que** le(s) saccharide(s) réducteur(s) et le(s) saccharide(s) hydrogéné(s) représente(nt) 10 à 90 % du poids du mélange constitué par le(s) saccharide(s) réducteur(s), le(s) saccharide(s) hydrogéné(s) et l'agent de réticulation polyfonctionnel, de préférence 20 à 85 %, avantageusement 30 à 80 %, mieux encore 40 à 65 % et de manière particulièrement avantageuse 45 à 65 %.

15. Composition selon l'une des revendications 1 à 14, **caractérisée en ce qu'elle** comprend en outre un catalyseur choisi parmi les acides et les bases de Lewis, les composés contenant du phosphore et les composés contenant du fluor et du bore.

16. Composition selon la revendication 15, **caractérisée en ce que** le catalyseur représente jusqu'à 20 % du poids total du(des) saccharide(s) réducteur(s), du(des) saccharide(s) hydrogéné(s) et de l'agent de réticulation polyfonctionnel, de préférence jusqu'à 10 %, et avantageusement est au moins égale à 1 %.

17. Composition selon l'une des revendications 1 à 16, **caractérisée en ce qu'**elle comprend en outre les additifs ci-après dans les proportions suivantes calculées sur la base de 100 parts en poids de saccharide(s) réducteur(s), de saccharide(s) hydrogéné(s) et d'agent de réticulation polyfonctionnel :

- 0 à 2 parts de silane, en particulier un aminosilane ou un epoxysilane,
- 0 à 20 parts d'huile, de préférence 4 à 15 parts,
- 0 à 30 parts d'urée, de préférence 0 à 20 parts,
- 0 à 5 parts d'un silicone,
- 0 à 20 parts d'un polyol différent des saccharides précités,

0 à 30 parts d'un « extendeur » choisi parmi les dérivés de la lignine tel que le lignosulfonate d'ammonium (LSA) ou le lignosulfonate de sodium, et les protéines animales ou végétales.

18. Procédé de fabrication d'un produit isolant acoustique et/ou thermique à base de laine minérale ou d'un voile de fibres minérales, selon lequel on fabrique la laine minérale ou les fibres minérales, on projette sur ladite laine ou lesdites fibres une composition d'encollage et on traite ladite laine ou lesdites fibres à une température permettant la réticulation de l'encollage et la formation d'un liant infusible, **caractérisé en ce que** la composition d'encollage est une composition d'encollage selon l'une quelconque des revendications 1 à 17.

**Patentansprüche**

1. Bindemittelzusammensetzung für Isolierprodukte auf Basis von Mineralwolle, insbesondere Stein- oder Glaswolle, **dadurch gekennzeichnet, dass** sie Folgendes umfasst:

   - mindestens ein reduzierendes Saccharid, ausgewählt aus reduzierenden Monosacchariden, die 3 bis 8 Kohlenstoffatome enthalten, und Dextrinen mit einem Dextroseäquivalent von größer oder gleich 15 und kleiner als 100,
   - mindestens ein hydriertes Saccharid, ausgewählt aus Erythrit, Arabit, Xylit, Sorbit, Mannit, Idit, Maltit, Isomaltit, Lactit, Cellobit, Palatinit, Maltotrit und Hydrierungsprodukten von Stärkehydrolysaten, und
   - mindestens ein polyfunktionales Vernetzungsmittel,
   wobei das oder die hydrierten Saccharide 40 bis 90 % des Gesamtgewichts des oder der reduzierenden Saccharide und des oder der hydrierten Saccharide ausmachen.

2. Zusammensetzung nach Anspruch 1, **dadurch gekennzeichnet, dass** das reduzierende Saccharid ausgewählt ist aus reduzierenden Monosacchariden, die 5 bis 7 Kohlenstoffatome enthalten.

3. Zusammensetzung nach Anspruch 2, **dadurch gekennzeichnet, dass** das reduzierende Monosaccharid eine Aldose ist.

4. Zusammensetzung nach Anspruch 3, **dadurch gekennzeichnet, dass** die Aldose eine Hexose wie Glucose, Mannose und Galactose ist.

5. Zusammensetzung nach Anspruch 1, **dadurch gekennzeichnet, dass** das hydrierte Saccharid das Hydrierungsprodukt eines Stärkehydrolysats, vorzugsweise ein Maltitsirup, ist.

6. Zusammensetzung nach Anspruch 1, **dadurch gekennzeichnet, dass** das hydrierte Saccharid eine zahlenmittlere molare Masse von kleiner als 5.000, besonders kleiner als 1.000 und noch besser von größer als 150 aufweist.

7. Zusammensetzung nach einem der Ansprüche 1 bis 6, **dadurch gekennzeichnet, dass** das oder die hydrierten Saccharide 40 bis 60 % des Gesamtgewichts des oder der reduzierenden Saccharide und des oder der hydrierten Saccharide ausmachen.

8. Zusammensetzung nach einem der Ansprüche 1 bis 7, **dadurch gekennzeichnet, dass** das polyfunktionale Vernetzungsmittel ausgewählt ist aus organischen Polycarbonsäuren oder Salzen dieser Säuren, Anhydriden und Polyaldehyden.

9. Zusammensetzung nach Anspruch 8, **dadurch gekennzeichnet, dass** die organische Polycarbonsäure mindestens zwei Carbonsäurefunktionen, vorzugsweise höchstens 300 und vorteilhafterweise höchstens 70 und noch besser höchstens 15 Carbonsäurefunktionen umfasst.

10. Zusammensetzung nach Anspruch 9, **dadurch gekennzeichnet, dass** die organische Polycarbonsäure eine nicht-polymere oder polymere Säure ist und dadurch, dass sie eine molare Masse aufweist, die zahlenmäßig im Allgemeinen kleiner als oder gleich 50.000, vorzugsweise kleiner als oder gleich 10.000 und vorteilhafterweise kleiner als oder gleich 5.000 ist.

**11.** Zusammensetzung nach Anspruch 9 oder 10, **dadurch gekennzeichnet, dass** die organische Polycarbonsäure nicht-polymer ist und zwei bis vier Carbonsäurefunktionen enthält.

**12.** Zusammensetzung nach Anspruch 8, **dadurch gekennzeichnet, dass** das Anhydrid Maleinsäureanhydrid, Bernsteinsäureanhydrid oder Phthalsäureanhydrid ist.

**13.** Zusammensetzung nach Anspruch 8, **dadurch gekennzeichnet, dass** der Polyaldehyd ein nicht-polymerer Dialdehyd wie Glyoxal, Glutaraldehyd, 1,6-Hexandial oder 1,4-Terephthalsäuredialdehyd ist.

**14.** Zusammensetzung nach einem der Ansprüche 1 bis 13, **dadurch gekennzeichnet, dass** das oder die reduzierenden Saccharide und das oder die hydrierten Saccharide 10 bis 90 Gew.-% der Mischung, bestehend aus dem oder den reduzierenden Sacchariden, dem oder den hydrierten Sacchariden und dem polyfunktionalen Vernetzungsmittel, vorzugsweise 20 bis 85 %, vorteilhafterweise 30 bis 80 %, noch besser 40 bis 65 % und auf besonders vorteilhafte Weise 45 bis 65 %, ausmachen.

**15.** Zusammensetzung nach einem der Ansprüche 1 bis 14, **dadurch gekennzeichnet, dass** sie ferner einen Katalysator umfasst, ausgewählt aus Lewis-Säuren und -Basen, phosphorhaltigen Verbindungen und fluor- und borhaltigen Verbindungen.

**16.** Zusammensetzung nach Anspruch 15, **dadurch gekennzeichnet, dass** der Katalysator bis zu 20 % des Gesamtgewichts des oder der reduzierenden Saccharide, des oder der hydrierten Saccharide und des polyfunktionalen Vernetzungsmittels, vorzugsweise bis zu 10 %, und vorteilhafterweise mindestens 1 % ausmacht.

**17.** Zusammensetzung nach einem der Ansprüche 1 bis 16, **dadurch gekennzeichnet, dass** sie ferner folgende Additive in nachfolgenden Anteilen umfasst, berechnet auf Basis von 100 Gewichtsteilen reduzierende(s) Saccharid(e), hydrierte(s) Saccharid(e) und polyfunktionales Vernetzungsmittel:

- 0 bis 2 Teile Silan, vor allem ein Aminosilan oder ein Epoxysilan,
- 0 bis 20 Teile Öl, vorzugsweise 4 bis 15 Teile,
- 0 bis 30 Teile Harnstoff, vorzugsweise 0 bis 20 Teile,
- 0 bis 5 Teile eines Silikons,
- 0 bis 20 Teile eines Polyols, das sich von den vorgenannten Sacchariden unterscheidet,
- 0 bis 30 Teile eines "Streckmittels", ausgewählt aus Ligninderivaten wie Ammoniumlignosulfonat (LSA) oder Natriumlignosulfonat und tierischen oder pflanzlichen Proteinen.

**18.** Verfahren zum Herstellen eines schall- und/oder wärmeisolierenden Produkts auf Basis von Mineralwolle oder eines Mineralfaservlieses, gemäß dem die Mineralwolle oder die Mineralfasern hergestellt wird, wobei eine Bindemittelzusammensetzung auf die Wolle oder die Fasern gesprüht wird und die Wolle oder die Fasern bei einer Temperatur behandelt werden, die das Vernetzen des Bindemittels und das Bilden eines unschmelzbaren Bindemittels ermöglicht, **dadurch gekennzeichnet, dass** die Bindemittelzusammensetzung eine Bindemittelzusammensetzung nach einem der Ansprüche 1 bis 17 ist.

**Claims**

**1.** Binder composition for insulation products based on mineral wool, particularly of rock wool or of glass wool, **characterized in that** it comprises

- at least one reducing saccharide selected from reducing monosaccharides containing 3 to 8 carbon atoms and dextrins having a dextrose equivalent higher than or equal to 15 and lower than 100,
- at least one hydrogenated saccharide selected from erythritol, arabitol, xylitol, sorbitol, mannitol, iditol, maltitol, isomaltitol, lactitol, cellobitol, palatinitol, maltotritol and the hydrogenation products of starch hydrolysates, and
- at least one polyfunctional crosslinking agent,
the hydrogenated saccharide(s) representing 40 to 90% of the total weight of reducing saccharide(s) and of hydrogenated saccharide(s).

2. Composition according to Claim 1, **characterized in that** the reducing saccharide is selected from reducing monosaccharides containing 5 to 7 carbon atoms.

3. Composition according to Claim 2, **characterized in that** the reducing monosaccharide is an aldose.

4. Composition according to Claim 3, **characterized in that** the aldose is a hexose such as glucose, mannose and galactose.

5. Composition according to Claim 1, **characterized in that** the hydrogenated saccharide is a product of hydrogenation of a starch hydrolysate, preferably a maltitol syrup.

6. Composition according to Claim 1, **characterized in that** the hydrogenated saccharide has a number-average molecular weight below 5000, more particularly below 1000, and better still greater than 150.

7. Composition according to one of Claims 1 to 6, **characterized in that** the hydrogenated saccharide(s) represent(s) 40 to 60% of the total weight of reducing saccharide(s) and of hydrogenated saccharide(s).

8. Composition according to one of Claims 1 to 7, **characterized in that** the polyfunctional crosslinking agent is selected from organic polycarboxylic acids or salts of these acids, anhydrides and polyaldehydes.

9. Composition according to Claim 8, **characterized in that** the organic polycarboxylic acid comprises at least two carboxyl functions, preferably at most 300, and advantageously at most 70, and better still at most 15 carboxyl functions.

10. Composition according to Claim 9, **characterized in that** the organic polycarboxylic acid is a non-polymeric or polymeric acid and **in that** it has a number-average molecular weight generally less than or equal to 50 000, preferably less than or equal to 10 000 and advantageously less than or equal to 5000.

11. Composition according to Claim 9 or 10, **characterized in that** the organic polycarboxylic acid is non-polymeric and contains two to four carboxyl functions.

12. Composition according to Claim 8, **characterized in that** the anhydride is maleic anhydride, succinic anhydride or phthalic anhydride.

13. Composition according to Claim 8, **characterized in that** the polyaldehyde is a non-polymeric dialdehyde, such as glyoxal, glutaraldehyde, 1,6-hexanedial or 1,4-terephthalic dialdehyde.

14. Composition according to one of Claims 1 to 13, **characterized in that** the reducing saccharide(s) and the hydrogenated saccharide(s) represent(s) 10 to 90% of the weight of the mixture consisting of the reducing saccharide(s), the hydrogenated saccharide(s) and the polyfunctional crosslinking agent, preferably 20 to 85%, advantageously 30 to 80%, better still 40 to 65% and particularly advantageously 45 to 65%.

15. Composition according to one of Claims 1 to 14, **characterized in that** it further comprises a catalyst selected from Lewis acids and bases, compounds containing phosphorus and compounds containing fluorine and boron.

16. Composition according to Claim 15, **characterized in that** the catalyst represents up to 20% of the total weight of the reducing saccharide(s), of the hydrogenated saccharide(s) and of the polyfunctional crosslinking agent, preferably up to 10%, and advantageously is at least equal to 1%.

17. Composition according to one of Claims 1 to 16, **characterized in that** it further comprises the following additives in the following proportions calculated on the basis of 100 parts by weight of reducing saccharide(s), of hydrogenated saccharide(s) and of polyfunctional crosslinking agent:

- 0 to 2 parts of silane, in particular an aminosilane or an epoxysilane,
- 0 to 20 parts of oil, preferably 4 to 15 parts,
- 0 to 30 parts of urea, preferably 0 to 20 parts,

- 0 to 5 parts of a silicone,

- 0 to 20 parts of a polyol different from the aforementioned saccharides,

0 to 30 parts of an "extender" selected from derivatives of lignin such as ammonium lignosulphonate (ALS) or sodium lignosulphonate, and animal or vegetable proteins.

18. Method of manufacturing an acoustic and/or thermal insulation product based on mineral wool or of a mat of mineral fibres, according to which mineral wool or mineral fibres are manufactured, a binder composition is sprayed onto said wool or said fibres and said wool or said fibres are treated at a temperature permitting crosslinking of the binder composition and formation of an infusible binder, **characterized in that** the binder composition is a binder composition according to any of claims 1 to 17.

E (MPa)

Début de réticulation T$_R$     Température (°C)

Fig. 1

**EP 2 739 680 B1**

## RÉFÉRENCES CITÉES DANS LA DESCRIPTION

**Documents brevets cités dans la description**

- US 5340868 A
- US 6071994 A
- US 6099773 A
- US 6146746 A
- US 6299936 B
- US 20020091185 A
- US 5318990 A
- US 5661213 A
- US 6331350 B
- US 20030008978 A
- US 5977232 A
- US 5932689 A
- US 20020188055 A
- US 20040002567 A
- WO 2006120523 A
- WO 2008053332 A
- US 20050215153 A
- US 5895804 A
- WO 2009080938 A
- WO 2010029266 A
- WO 0196254 A1